# EUROPÄISCHE PATENTSCHRIFT

(11) **EP 1 527 866 B1**
(45) Veröffentlichungstag und Bekanntmachung des Hinweises auf die Patenterteilung: **04.03.2009**
(21) Anmeldenummer: 04022512.0
(22) Anmeldetag: 22.09.2004
(51) Int. Cl.: B29C 39/12, B62D 29/04

(54) **Mehrschichtige Kunststoffwand für einen Aufbau eines Kraftfahrzeugs**
Multilayered plastic partition for a vehicle
Paroi multicouche en matière plastique pour un véhicule

(30) Priorität: 03.11.2003 DE 10351181
(43) Veröffentlichungstag der Anmeldung: 04.05.2005
(60) Teilanmeldung: 08021239.2
(73) Patentinhaber: Dr. Ing. h.c. F. Porsche Aktiengesellschaft, 70435 Stuttgart (DE)
(72) Erfinder: Schwan, Norbert, 71277 Rutesheim (DE); Erb, Thiemo Adolf, 70182 Stuttgart (DE)

(56) Entgegenhaltungen:
- EP-A- 0 289 860
- EP-A- 1 052 164
- WO-A-01/19599
- WO-A-02/28624
- DE-A- 1 504 586
- DE-A- 19 914 327
- DE-A1- 3 934 555
- GB-A- 1 341 438
- US-A- 5 441 590
- US-A- 5 910 458
- US-A1- 2001 033 923

## Beschreibung

Die Erfindung betrifft eine Wand für einen Aufbau eines Kraftfahrzeugs, insbesondere Personenkraftwagens, die durch ein mehrere Schichten aus Kunststoff umfassendes Laminat gebildet wird.

Es ist ein Verbundbauteil für eine Fahrzeugkarosserie mit einer faserfreien Außenhaut und einer faserverstärkten Trägerstruktur bekannt, DE 102 02 911 C2, die an einer Innenseite dieser Außenhaut aufgebracht ist, um besagte Außenhaut zu verstärken. Dabei ist in dem Bereich an der Grenzfläche und der Trägerstruktur eine Grenzschicht ausgebildet. Innerhalb der Grenzschicht ist der Faseranteil bezüglich des außerhalb der Grenzschicht liegenden Bereichs der Trägerstruktur erhöht. Mit dieser Lösung wird angestrebt, dass Temperaturänderungen weitgehend keinen Einfluss auf die Qualität der Oberfläche haben.

In der DE 101 20 912 A1 wird ein Verbundbauteil für eine Karosserie behandelt, das eine Schicht mit einer lackierfähigen Oberfläche aus kurzfaserverstärktem Polyurethan und einer weiteren Schicht aus langfaserverstärktem Polyurethan aufweist. Dieser Schichtaufbau soll zur Qualitätsoptimierung der lackierten Oberfläche beitragen.

Die US 2001/0033923 A1 beschreibt eine Glasfasermatte mit einer ersten Schicht aus unidirektionalen, parallel ausgerichteten Glasfasersträhnen, mit einer zweiten Schicht aus Glasfasersträhnen, wobei die zweite Schicht als Wirrfaser ausgebildet ist, und mit einer dritten Schicht, die zwischen den ersten beiden Schichten angeordnet ist und die z.B. aus nicht gewebtem Material bestehen kann.

Aus der DE 39 34 555 A1 ist ein faserverstärktes Sandwichlaminat für Karosserieteile von Kraftfahrzeugen bekannt, wobei das aus Kunststoff bestehende Sandwichlaminat eine mittige Schicht mit einer durchgehenden Kunststofffaser-Armierung, mindestens zwei jeweils auf der Ober- und Unterseite der mittigen Schicht angeordnete Tragschichten und je ein an die oberste bzw. an die unterste Tragschicht angrenzendes Oberflächenflies aufweist

Die GB 1 341 438 offenbart einen stanzbaren, glasfaserverstärkten Schichtstoff auf der Grundlage eines thermoplastischen Harzes, welcher einen Anteil eines thermoplastischen Grundgefügeharzes, einen Anteil an groben Glasfasern, einen Anteil an Füllmaterial, sowie einen Anteil an feinen Fasern in Form einer Oberflächenmatte umfasst.

Zur Bildung eines Verbundstoffs mit einer glänzenden Oberfläche wird in der GB 1 341 438 folgende Reihe aufeinanderfolgender Schichten vorgeschlagen: Eine Harzoberschicht gefolgt von einer Schicht aus feinen Fasern, gefolgt von einer Glasverstärkungsmatte, gefolgt von einem Harzgrundgefüge, auf das wiederum eine Glasverstärkungsmatte und ein weiteres Harzgrundgefüge sowie eine weitere Glasverstärkungsmatte und noch ein weiteres Harzgrundgefüge folgt. Zur Herstellung gestanzter Verbundstoffe aus Glasfasern und thermoplastischem Harz mit gestrichener oder beschichteter Oberfläche, die durch ein relativ hohes Maß an Glanz charakterisiert und im Wesentlichen frei von Oberflächenfehlern sind, wird in der GB 1 341 438 vorgeschlagen, bei der Fertigung des gestanzten Verbundstoffes aus einem stanzbaren Rohling, wobei unter anderem als Material feine Glasfasern in Form einer Oberflächenmatte verwendet werden, für die Anwendung bei äußeren Fahrzeugteilen etwa 15 bis 50 Gewichtsprozent an Glasfasern zu verwenden.

Aus der WO 01/19599A1 ist eine Harzmatte zur Herstellung faserverstärkter duroplastischer Bauteile bekannt, bestehend aus einer Harzmatrix mit einer Faserverstärkung mit unidirektionalen Fasern, die in einer axialen Ausrichtung angeordnet sind, und zusätzlich mit geschnittenen Fasern, die ungerichtet in der Harzmatrix angeordnet sind. Um bei niedrigem Flächengewicht eine extrem hohe Festigkeit in multiaxialer Richtung zu erreichen, wird in der WO 01/19599A1 vorgeschlagen, mehrere Harzmatten mit unidirektionalen Fasern mit voneinander verschiedener axialer Ausrichtung in dem Bauteil anzuordnen.

Aufgabe der Erfindung ist es, durch eine gezielte Kombination und Ausbildung von Schichten aus Kunststoff eine Wand für einen Aufbau eines Personenkraftwagens zu schaffen, die sich durch eine hohen Qualitätsstand für die zu lackierende Oberfläche auszeichnet.

Erfindungsgemäß wird diese Aufgabe durch eine Wand gemäß Anspruch 1 sowie ein Verfahren gemäß Anspruch 4 gelöst. Weitere, die Erfindung ausgestaltende Merkmale sind in den Unteransprüchen enthalten.

Die mit der Erfindung hauptsächlich erzielten Vorteile sind darin zu sehen, dass die Zusammensetzung der Schichten der bei dem Aufbau des Personenkraftwagens verbauten Wand, insbesondere der Einsatz der zweiten Schicht, die als Vlies ausgebildet ist und der dritten Schicht, die mehrere unidirektionale Lagen umfasst, dazu beiträgt, dass die durch das Gewebe erzeugten Oberflächenabzeichnungen, die durch Temperatur und Feuchtigkeit - Relativbewegung Harz zur Matrix - entstehen, vermieden werden. Dadurch ist an der äußeren Schicht der Wand d.h. an ihre lackierfähigen Außenseite eine Class - A Oberfläche realisierbar, die bei visueller Betrachtung hochwertig erscheint. Bei der Beurteilung der Hochwertigkeit werden vor allem Lang- und Kurzwelligkeit, Fehlstellen und/oder Glanzgrad berücksichtigt. Die Schichten sind im Handel verfügbar und können im vorimprägnierten Zustand - sogenannte Prepregs - in ein Werkzeug bspw. einen Autoklav eingebracht werden. Als Varianten sind denkbar das Vlies trocken - nicht imprägniert - zu lassen, so dass es von den angrenzenden Schichten mitimprägniert wird bzw. es mit besagten angrenzenden Schichten durch Kleben, Nähen oder dgl. zu verbinden. Möglich ist aber auch die Schichten im Trockenzustand oder nicht imprägniert in das Werkzeug einzusetzen und dann mittels Harz- Injektionsverfahren zu beaufschlagen.

In der Zeichnung wird ein Ausführungsbeispiel der Erfindung gezeigt, das nachstehend näher erläutert wird.

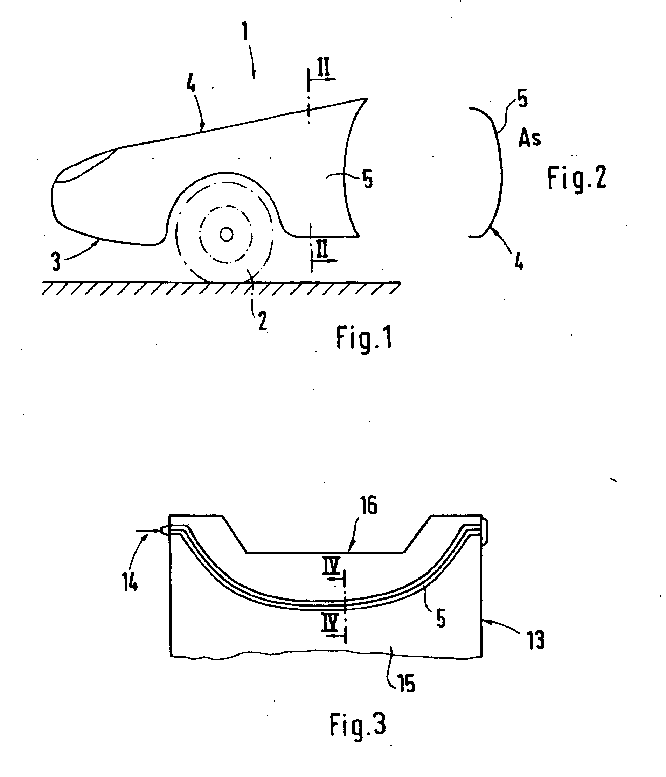

Es zeigen
- Fig. 1: eine Teilseitenansicht eines Aufbaus eines Personenkraftwagens im Bereich eines Frontseitenteils mit einer Wand nach der Erfindung,
- Fig. 2: einen Schnitt nach der Linie II - II der Fig.1,
- Fig. 3: eine Ansicht entsprechend Fig. 2, jedoch um 90° gedreht und einem schematisch dargestellten Werkzeug zur Herstellung des Frontendteils und

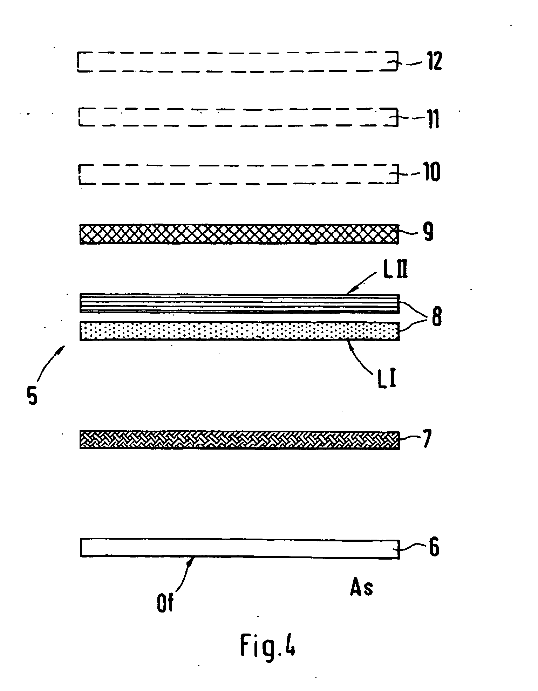

- Fig. 4: einen Schnitt nach der Linie IV-IV der Fig. 3 mit einem schematisch dargestellten Schichtaufbau der Wand nach Fig. 1.

Von einem Personenkraftwagen 1, der einen von Rädern 2 getragenen Aufbau 3 umfasst, ist lediglich ein Frontseitenteil 4 in Gestalt eines vorderen linken Kotflügels dargestellt. Das Frontseitenteil 4 erstreckt sich in Längsrichtung A-A des Personenkraftwagens 1 gesehen bspw. von einer Windschutzscheibe bis zu einem Bugteil, und es weist eine Wand 5 auf, die aus einem Kunststoff der Gattung Verbundwerkstoff CFK besteht. Die Wand 5 besitzt eine von einer Außenseite As des Personenkraftwagens 1 aus sichtbare Oberfläche Of, die lackiert ist und mit einer hochwertigen Oberflächengüte - Class-A Oberfläche - versehen ist.

Hierzu wird die Wand 5 durch ein Laminat gebildet, das einen Schichtaufbau mit mehreren Schichten umfasst. Eine erste äußere Schicht 6 mit der Oberfläche Of wird durch eine Oberflächenfilm mit einer bspw. gering verstärkten Harzschicht gebildet, der aus Glasfaser GF, Kohlefaser CF oder anderen geeigneten Verstärkungsfasern besteht. An die erste Schicht 6 grenzt eine zweite Schicht 7 ohne strukturelle Funktion an, die durch ein Vlies dargestellt ist. Hierfür eignen sich Glasfaser GF, Kohlefaser CF, Polyacrylinitril, Mesophasenpech und Polyester PES. Eine dritte Schicht 8 mit struktureller Funktion ist an die zweite Schicht 7 herangeführt und umfasst zwei Lagen mit unidirektionaler Orientierung - 0° und 90° orientiert - , die aus Kohlefaser CF oder Glasfaser GF bestehen. Mit der dritten Schicht 8 verbunden ist eine vierte Schicht 9, die eine strukturelle Basis darstellt und als unidirektionales Gewebe aus Kohlefaser CF oder Glasfaser GF ausgebildet Ist. Denkbar ist aber auch, dass diese Schicht einen SandwichAufbau oder einem Kernverbund aufweist.

Die das Vlies bildende Schicht 7 ist mit wenigstens einer angrenzenden bspw. der ersten Schicht 6 durch Kleben oder mechanisches Fügen, wie Nähen verbunden ist. Möglich ist darüber hinaus, die durch das Vlies gebildete Schicht 7 als ein vorimprägniertes Bauteil auszubilden, das, weil haftfähig, an einer der angrenzenden Schichten 6 oder 8 gehalten wird.

Im Ausführungsbeispiel kann auf die vierte Schicht 9 eine fünfte Schicht 10, gegebenenfalls auch noch eine sechste Schicht 11 und eine siebte Schicht 12 aus Gewebe aufgetragen werden.

Bei dem Verfahren zur Herstellung der Wand 5 werden beispielsweise die Schichten 8 und 9 in Form von vorimprägnierten Bauteilen in das Fertigungsverfahren bzw. in ein schematisch angedeutetes Werkzeug 13 eingebracht. Gegebenenfalls können auch noch weitere Schichten in diesem Zustand eingebracht. Dabei ist es aber auch möglich, dass wenigstens eine der Schichten unimprägniert in das Werkzeug 13 eingebracht wird und mittels einer nächsten anliegenden imprägnierten Schicht mitimprägniert wird.

Allerdings bietet sich auch an, dass die Wand 5 bildenden Schichten in nicht imprägniertem Zustand, also trocken im Werkzeug 13 zusammengesetzt werden und mittels eines Injektionsverfahrens mit Harz getränkt werden. Dieses Harz wird bei 14 in das Werkzeug 13, das ein Unterteil 15 und ein Oberteil 16 umfasst, eingebracht.

Schließlich wird die Oberfläche der Wand 4 dadurch verbessert, dass an die Außenseite As der ersten Schicht 6 ein Sprühfilm - Gel Coat - aufgebracht wird.

## Patentansprüche

1. Wand für einen Aufbau eines Kraftfahrzeugs, insbesondere Personenkraftwagens, die durch ein mehrere Schichten aus Kunststoff umfassendes Laminat gebildet wird, wobei die Wand folgenden Schichtaufbau aufweist
- eine erste äußere durch einen Harzfilm gebildete Schicht (6),
- eine zweite an die erste Schicht (6) angrenzende durch ein Vlies gebildete Schicht (7),
- eine dritte an die zweite Schicht (7) angrenzende Schicht (8),
wobei
- die dritte Schicht (8) zwei Lagen mit unidirektionaler Orientierung aufweist, die 0° und 90° orientiert sind, wobei
- an die dritte Schicht (8) eine vierte Schicht (9) angrenzt, die durch ein unidirektionales Gewebe gebildet wird, und wobei zumindest die dritte Schicht (8) und die vierte Schicht (9) vorimprägnierte Bauteile sind, und wobei
- an die Außenseite (As) der ersten Schicht (6) ein Gel Coat als Sprühfilm aufgebracht ist.

2. Wand nach Anspruch 1, **dadurch gekennzeichnet, dass** auf die vierte Schicht (9) eine fünfte, gegebenenfalls auch noch eine sechste Schicht (11) und eine siebte Schicht (12) aus Gewebe aufgetragen ist

3. Wand nach Anspruch 1, **dadurch gekennzeichnet, dass** die durch das Vlies gebildete zweite Schicht (7) mit wenigstens einer der angrenzenden Schichten (6 oder 8) mechanisch bspw. durch Nähen verbunden ist.

4. Verfahren zur Herstellung der Wand nach einem oder mehreren der vorangehenden Ansprüche, **dadurch gekennzeichnet, dass** zumindest die dritte Schicht (8) und die vierte Schicht (9) in Form von vorimprägnierten Bauteilen in ein Werkzeug eingebracht werden, wobei die die Wand bildenden Schichten in dem Werkzeug zusammengesetzt werden, und wobei an die Außenseite (As) der ersten Schicht (6) ein Sprühfilm aufgebracht wird.

5. Verfahren nach Anspruch 4 zur Herstellung einer Wand nach Anspruch 2, **dadurch gekennzeichnet, dass** wenigstens eine der auf die vierte Schicht (9) folgenden, weiteren, die Wand (5) bildenden Schichten unimprägniert in das Werkzeug (13) eingebracht wird und mittels einer nächsten anliegenden imprägnierten Schicht mit imprägniert wird.

## Claims

1. Wall for a body of a motor vehicle, in particular a passenger car, which is formed by a laminate comprising a number of layers of plastic, the wall having the following layer structure
- a first, outer layer (6), formed by a resin film,
- a second layer (7), adjoining the first layer (6) and formed by a nonwoven,
- a third layer (8), adjoining the second layer (7),
wherein
- the third layer (8) has two plies with unidirectional orientation, which are oriented at 0° and 90°, wherein
- the third layer (8) is adjoined by a fourth layer (9), which is formed by a unidirectional woven fabric, and wherein at least the third layer (8) and the fourth layer (9) are preimpregnated components, and wherein
- a gel coat is applied as a spray film to the outer side (As) of the first layer (6).

2. Wall according to Claim 1, **characterized in that** a fifth layer is applied to the fourth layer (9), and optionally also a sixth layer (11) and a seventh layer (12) of woven fabric.

3. Wall according to Claim 1, **characterized in that** the second layer (7), formed by the nonwoven, is mechanically joined to at least one of the adjoining layers (6 or 8), for example by sewing.

4. Method for producing the wall according to one or more of the preceding claims, **characterized in that** at least the third layer (8) and the fourth layer (9) are introduced into a mould in the form of preimpregnated components, wherein the layers forming the wall are put together in the mould, and wherein a spray film is applied to the outer side (As) of the first layer (6).

5. Method according to Claim 4 for producing a wall according to Claim 2, **characterized in that** at least one of the further layers forming the wall (5) that follow the fourth layer (9) is introduced into the mould (13) in an unimpregnated form and is impregnated by means of a next, impregnated layer lying against it.

## Revendications

1. Paroi pour une structure de véhicule automobile, en particulier une voiture de tourisme, qui est formée par un stratifié comprenant plusieurs couches de plastique, la paroi présentant la structure en couche suivants :
- une première couche extérieure (6) formée par un film de résine,
- une deuxième couche (7) formée par un voile et adjacente à la première couche (6),
- une troisième couche (8) adjacente à la deuxième couche (7),
- la troisième couche (8) présentant deux couches d'orientation unidirectionnelle, qui sont orientées à 0° et à 90°,
- une quatrième couche (9) étant adjacente à la troisième couche (8), et étant formée par un tissu unidirectionnel, et au moins la troisième couche (8) et la quatrième couche (9) étant des composants pré-imprégnés, et
- un revêtement de gel étant appliqué sous forme de film pulvérisé sur le côté extérieur (As) de la première couche (6).

2. Paroi selon la revendication 1, **caractérisée en ce qu'**une cinquième et éventuellement encore une sixième couche (11), et une septième couche (12) de tissu sont appliquées sur la quatrième couche (9).

3. Paroi selon la revendication 1, **caractérisée en ce que** la deuxième couche (7) formée par le voile est connectée à au moins l'une des couches adjacentes (6 ou 8) de manière mécanique, par exemple par couture.

4. Procédé de fabrication de la paroi selon l'une quelconque des revendications précédentes, **caractérisé en ce qu'**au moins la troisième couche (8) et la quatrième couche (9) sont introduites sous forme de composants pré-imprégnés dans un outil, les couches formant la paroi étant assemblées dans l'outil, et un film pulvérisé étant appliqué sur le côté extérieur (As) de la première couche (6).

5. Procédé selon la revendication 4, pour la fabrication d'une paroi selon la revendication 2, **caractérisé en ce qu'**au moins l'une des couches supplémentaires formant la paroi (5), suivant la quatrième couche (9), est introduite de façon non imprégnée dans l'outil (13) et est imprégnée au moyen d'une couche imprégnée s'appliquant après elle.
